Europäisches Patentamt

(19) **European Patent Office**

**Office européen des brevets**

(11) Publication number: **0 155 083**
**A1**

(12) # EUROPEAN PATENT APPLICATION

(21) Application number: **85300936.3**

(22) Date of filing: **13.02.85**

(51) Int. Cl.⁴: **F 16 J 15/12**, B 32 B 9/04

---

(30) Priority: **25.02.84 GB 8404983**

(43) Date of publication of application: **18.09.85**
**Bulletin 85/38**

(84) Designated Contracting States: **BE DE FR NL SE**

(71) Applicant: **FLEXITALLIC LIMITED, Station Lane,**
**Heckmondwike West Yorkshire, WF16 ONE (GB)**

(72) Inventor: **Gee, Colin, 3 Crossley Grove, Mirfield**
**Yorkshire (GB)**
Inventor: **Lancaster, Janet Margaret, 64 Whitegate**
**Dearnley, Littleborough Lancashire (GB)**

(74) Representative: **Crux, John Anthony et al, P.O.**
**Box 20 Ashburton Road West Trafford Park, Manchester**
**M17 1RA (GB)**

---

(54) **Improved gasket materials.**

(57) Gasket material in the form of a flexible expanded graphite web of indefinite length includes a reinforcing metal core of negligible thickness, (not more than 25 microns thick). The core is preferably of nickel, or pure iron.

EP 0 155 083 A1

ACTORUM AG

0155083

Improved Gasket Materials

## Technical Field of the Invention

This invention relates to gasket materials and to gaskets made therefrom by conventional processes such as cutting and stamping. In particular, the invention is concerned with gasket materials predominantly comprised of expanded graphite. Expanded, or exfoliated, graphite has been known for very many years, but it is only relatively recently that its unique properties as a gasket material have received full recognition and that considerable efforts to exploit these properties have been made.

## Discussion of the Prior Art

Patent GB 9922 of 1891 discloses the production of vermiform, expanded graphite of a kind which can be readily moulded into shaped articles such as plates without the use of a binder. GB 1049588 discloses, inter alia, that vermiform expanded graphite can be calendered into relatively thin, flexible webs, again without the use of a binder. It also discloses the use of such webs as high temperature, chemically inert gaskets.

In practical terms, relatively thin expanded graphite webs are fragile, possessing little mechanical strength, so that they present considerable problems when subjected to the normal handling steps of conventional gasket production processes. US 3492197, GB 1504841 and GB 1522172 all disclose laminate structures in which graphite foil is applied to a metal core sheet which may be plain, perforated or a wire mesh.

The core materials used in practice include relatively soft aluminium foil and stainless steel sheet with thicknesses in the range 100 microns upwards. The products are relatively expensive and in the case of steel are stiff and do not lend themselves to cutting with cheap tooling of the kind generally used for soft cutting gaskets. Soft cutting ("frame cutting") generally uses a knife edge set into a plywood backing member.

GB 2072768 discloses a further approach to the formation of a specific gasket, in which a plain metal reinforcement is enclosed by graphite foils relative to at least one edge of the reinforcement, with the result that not only is the graphite internally reinforced, but also that the reinforcement is itself protected against chemical attack at that one edge. Although such gaskets are technically excellent from a performance standpoint, they cannot be made by conventional processes. Also, a proportion of the graphite is unreinforced and therefore extremely vulnerable to mechanical damage in handling/installation.

Object of the Invention

It is an object of the invention to provide a flexible, expanded graphite web material which is readily processable into gaskets by conventional methods such as frame cutting, die stamping, or by winding.

## Brief Description of the Invention

According to the present invention gasket material in the form of a flexible expanded graphite web of indefinite length is characterised by the inclusion of a reinforcing metal core of negligible thickness. For present purposes, "negligible thickness" means not more than 25 microns thick. The metal is preferably selected from the group comprising nickel and substantially pure iron; nickel is particularly preferred. Both are available as electroformed sheet with thicknesses in the range of 4 to 25 microns.

## Further Aspects of the Invention

In the case of nickel, useful gasket material can be made with a core as thin as 4 microns. However, a core 10 microns thick is more resistant to mechanical damage in processing into gaskets and is therefore particularly preferred. The core may be plain, or perforated, although the latter has no especial advantage.

Although expanded graphite adheres well to itself, it does not adhere as readily to a metal substrate so it is preferred to use an adhesive system. A proprietary nitrile/phenolic resin adhesive has proved satisfactory for many applications. In the alternative, the substrate may be perforated, or pierced, in known manner, to achieve bonding without adhesive.

Contrary to what might be expected, the use of a metal core of such a negligible thickness that its presence is difficult to detect by visual inspection, so greatly increases the tensile strength of the graphite web that it can be readily used in existing, conventional gasket forming processes without significant risk of handling damage. The thermal and chemical properties of nickel in particular are very satisfactory for most gasket applications, so that the presence of the core is not normally a restrictive or critical factor. In use as a gasket, of course, the graphite is usually well supported by other hardware, so that the core no longer has a major strengthening function to perform.

A further and important advantage of the invention resides in the fact that it enables the production of useful graphite webs of reduced thickness. This is because the poor tensile strength of expanded graphite is no longer the controlling factor. Such relatively thin webs are valuable because they can be readily slit into the narrow strips used for winding into spiral wound gaskets, without the significant risk of breakage that was previously encountered. Yet another advantage lies in the fact that lower purity grades of graphite, for example down to about 80%, can be used, even though the tensile strength (unreinforced) may be only of the order of a half of the of 99% pure graphite. This may result in very significant cost savings.

## Description of Preferred Embodiments

In order that the invention be better understood, preferred embodiments of it will now be described by way of example.

## Example 1

Expanded, 95% pure graphite webs, each 750 microns thick were laminated to the faces of an electroformed nickel core 10 microns thick using a proprietary nitrile/phenolic resin adhesive to produce a graphite sheet laminate 1510 microns thick. It had a tensile strength of 22.4 $N/mm^2$ and was processed into annular gaskets for use between flanged components, by means of a conventional frame cutting tool, without any problems either in production or in subsequent handling/use.

By contrast, a single, unreinforced graphite web 1500 microns thick had a tensile strength of only 5.2$N/mm^2$. Conventional processing into similar gaskets resulted in an unacceptable incidence of cracking and waste. Such gaskets as were satisfactorily produced were fragile and very prone to damage in both handling and installation.

Repeating the test with 80% pure graphite gave values of 7.7 and 2.4 $N/mm^2$, respectively.

Example 2

Expanded, 95% pure graphite webs each 200 microns thick were laminated to the faces of an electroformed nickel core 10 microns thick, using a nitrile/phenolic adhesive as before, to produce a laminate about 410 microns thick. It had a tensile strength of 33.2 $N/mm^2$ and was slit into thin strips, each 5mm wide; these were coiled up prior to winding into spiral wound gaskets.

.All these steps were carried out on conventional production plant. No handling or breakage problems were encountered.

By contrast, a single, unreinforced graphite web 400 microns thick had a tensile strength of only 4 $N/mm^2$ and was quite unsatisfactory from a production standpoint, due to breakage/waste in slitting, coiling, and in winding into spiral wound gaskets.

Repeating the test with 80% pure graphite gave values of 24.9 and 2.9 N/mm$^2$, respectively.

Example 3

A self-supporting graphite laminate was made by adhesively bonding expanded, 95% pure graphite foils only about 100 microns thick onto the faces of a nickel core 10 microns thick. The product was processed entirely conventionally into thin gaskets without significant difficulty. By contrast, an unreinforced laminate of similar thickness was too delicate to process conventionally. Careful cutting (by hand) yielded similarly thin gaskets, but they were extremely vulnerable to accidental damage in both handling and installation.

Example 4

A self-supporting graphite laminate was made by adhesively bonding two expanded 95% pure graphite foils each 200 microns thick onto the opposite faces of a nickel foil 10 microns thick. The laminate was slit into strips of width 10, 15, 20 and 25mm. These were passed through corrugating rollers and coiled up to make gland packing materials. Some of the coiled-up material was compacted in a die (using a punch) to make die-formed rings, for use as shaft seals, for example.

By contrast, although an unreinforced graphite sheet 400 microns thick could be slit, coiled and formed in the same way, it was much more likely to fracture in processing. The reinforced laminate could be processed both much more reliably and faster without significant difficulty.

## Performance Evaluation

Gaskets made from the reinforced laminates (both 80% and 95% pure graphite) of Example 1 were tested under pressure and temperature in a standard test rig. Comparative tests were then carried out using a well-known asbestos-rubber composite sheet gasket material. The test conditions were as follows:- A standard size 50mm nominal bore gasket was located between a pair of raised face bolted flanges, the bolts of which were then tightened to a torque of 8.3 kg/metre, prior to a leakage test comprising pressurising the flange to 50 bar with nitrogen for 16 hours at ambient temperature. The gas was released and the joint assembly heated to 460°C, at 200°C per hour. The hot assembly was then pressurised to 21 bar, for 1 hour and allowed to cool to 80°C, in still air. The residual pressure was noted prior to re-heating, as before, for a further 1 hour at 460°C prior to reading off the pressure attained on re-heating. To pass this test, the pressure must return to 21 bar on re-heating.

Gaskets made from expanded graphite webs according to the invention easily passed this test. Similar gaskets made from asbestos-rubber composite material failed, from which it was readily apparent that graphite gasket material in accordance with the present invention outperforms the traditional material by a very considerable margin. Moreover, it does so without a correspondingly significant increase in cost; the core material has minimal/negligible thickness and when processing/handling costs are taken into account, it does not have the punitive effect on product cost that might have been expected of conventional reinforcements. In short, the gasket material of this invention can completely replace a whole range of traditional products, at the same time giving much better performance at elevated temperatures, at and far beyond the capabilities of the traditional products so replaced.

The fact that it can be handled without special care is significant in this context, because waste and/or reject products are minimised.

CLAIMS

1 A gasket material in the form of a flexible, expanded graphite web of indefinite length, characterised by the inclusion of a reinforcing metal core sheet not more than 25 microns thick.

2 A gasket material according to claim 1 characterised in that the metal is nickel or substantially pure iron.

3 A gasket material according to claim 2 characterised in that the metal is an electroformed sheet of thickness in the range 4 to 25 microns.

4 A gasket material according to any of claims 1-3, characterised in that the web comprises a laminate of two unreinforced expanded graphite webs onto the opposite faces of the metal core sheet.

5 A gasket material according to claim 4 characterised in that the webs are laminated onto the core using a nitrile/phenolic resin adhesive.

6 A gasket material according to claim 4 characterised in that the webs are laminated onto a core which is perforated and/or pierced, without using adhesive.

7 A gasket material according to any preceding claim further characterised in that the metal core is either plain or perforated.

8 The use of the gasket material of any preceding claim to make a predominantly graphite gasket.

# 0155083

European Patent Office

**EUROPEAN SEARCH REPORT**

Application number

EP 85 30 0936

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 234 638 (M.YAMAZOE)<br><br>* Claims 1,3; column 4, lines 3-7; column 5, line 3 - column 6, line 12; figures 4-6 * | 1,2,4-9 | F 16 J 15/12<br>B 32 B 9/04 |
| A,D | US-A-3 492 197 (F.OLSTOWSKI et al.)<br>* Claims 1,8,18-20; column 4, lines 28-47; column 6, line 5 - column 7, line 4; examples IIIb,c * | 1,2,4-9 | |
| A | EP-A-0 030 843 (FLEXITALLIC GASKETS)<br>* Claim 1; page 1, paragraph 3 - page 2, paragraph 3; page 4; figure 1 * | 1,4,7-9 | |
| | | | TECHNICAL FIELDS SEARCHED (Int. Cl.4)<br><br>F 16 J<br>B 32 B |

The present search report has been drawn up for all claims

| Place of search | Date of completion of the search | Examiner |
|---|---|---|
| THE HAGUE | 24-05-1985 | BLASBAND I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82